# EUROPEAN PATENT APPLICATION

(11) **EP 3 067 851 A1**
(43) Date of publication of application: **14.09.2016**
(21) Application number: 14860529.8
(22) Date of filing: 07.11.2014
(51) Int. Cl.: G06Q 50/10, G06Q 50/30

(54) **RAILROAD MAINTENANCE SUPPORT METHOD AND RAILROAD MAINTENANCE SUPPORT DEVICE**

(30) Priority: 08.11.2013 JP 2013231847
(71) Applicant: East Japan Railway Company, Tokyo 151-8578 (JP)
(72) Inventor: YOKOYAMA, Atsushi, Tokyo 151-8578 (JP); TAKIKAWA, Mitsunobu, Tokyo 151-8578 (JP); TERASHIMA, Ryou, Tokyo 151-8578 (JP)
(74) Representative: Grünecker Patent- und Rechtsanwälte PartG mbB
(86) International application number: PCT/JP2014/079578
(87) International publication number: WO 2015/068801

(57) **Abstract**

Provided is a railroad maintenance support device with which even a person who is not a veteran worker can ascertain the timing for implementation of appropriate maintenance work, on the basis of collected data, and implement maintenance work of an appropriate content. Included are the following: a data collection step for collecting data necessary in order to make a determination on implementation timing; a data analysis step for predicting the timing of implementation for maintenance work, on the basis of an analysis value that is an analysis of data and a set threshold value; an extraction step for extracting maintenance work proposals, using prescribed extraction conditions, from past maintenance work contents; a decision-making support step for providing predicted implementation timing and extracted maintenance work proposals; a data accumulation processing step for associating implemented maintenance work content with prescribed work information for the maintenance work, and accumulating the results; and a threshold correction step for analyzing prescribed work information accumulated by the data accumulation processing step and correcting a threshold value.

## Description

### Technical Field

The present invention relates to a railway maintenance support method and a railway maintenance support device.

### Background Art

In order to secure safety of railway transport, regular maintenance work on related equipment such as track equipment, overhead wires, devices of rolling stock and electric power equipment is indispensable, and in order to determine timing of the maintenance work, collection of data is necessary.

For example, for measuring and collecting data of track materials of rails or the like relating to track equipment, workers need to go to worksites and measure and collect the data. In this case, the workers need, for their own security, to perform the measurement and the like outside operating hours or by picking a timeslot in which no rolling stock in operation runs. Further, for measuring and collecting data of track irregularity of rails or the like, an inspection car is used to measure and collect the data, but the measurement is performed only four times or so per year.

To deal with these, there is described, for example, in Patent Document 1 that rolling stock in operation is provided with a track equipment monitoring device, and the provided track equipment monitoring device is used to measure data of track materials of rails, track irregularity thereof and the like, whereby the device obtains the data of track irregularity of rails and the like while the rolling stock in operation is running.

Then, when timing of maintenance work on track equipment is determined, a content of the maintenance work and the timing of the work are decided from the collected data of track irregularity of rails or the like on the basis of previous experience and the like, and when the decided timing of the work arrives, the maintenance work is carried out with the decided content.

### Related Art Document

### Patent Document

Patent Document 1: Japanese Patent Application Publication No. 2011-214933

### Summary of the Invention

### Problems to be Solved by the Invention

However, in order to specifically decide the content of the maintenance work and the timing thereof from the collected data, experience and knowledge of a veteran site worker are necessary. Thus, there is a problem that a worker without sufficient experience has difficulty in deciding the content of the maintenance work and the timing thereof with certainty.

Further, even when the content of the maintenance work is decided, cost advantages produced by carrying out the maintenance work at the timing, the length of a period to the next maintenance work and the like are unclear. Thus, there is also a problem that quantitative evaluation of whether the carried-out maintenance work is appropriate cannot be performed.

Objects of the present invention are to provide a railway maintenance support method and a railway maintenance support device with which even if a worker is not a veteran, the worker can perceive appropriate timing of maintenance work and carry out the maintenance work with an appropriate content on the basis of collected data.

### Means for Solving the Problems

In order to achieve the above objects, the present invention includes: a data collection step of collecting predetermined data necessary to determine timing of maintenance work on a railway and storing the data in a first storage unit; a data analysis step of estimating the timing of the maintenance work on the basis of an analytic value obtained by analyzing the data stored in the first storage unit and a set threshold; an extraction step of extracting, under a predetermined extraction condition, a maintenance work plan from a previous maintenance work content accumulated in a second storage unit; a decision-making support step of showing a user the estimated timing and the extracted maintenance work plan; a data accumulation process step of correlating and accumulating in the second storage unit a carried-out maintenance work content with predetermined work information on the maintenance work; and a threshold correction step of analyzing the predetermined work information accumulated in the second storage unit at the data accumulation process step and correcting the threshold.

Preferably, the predetermined work information includes a deterioration rate of a maintenance target after the maintenance work, and at the threshold correction step, the threshold is corrected according to the deterioration rate, which is estimated, of the maintenance target.

Preferably, at the data analysis step, the analytic value is calculated by analyzing the collected data with a statistic method.

Preferably, at the data analysis step, the analytic value is calculated by analyzing the collected data with principal component analysis, invariant analysis or cluster analysis.

Preferably, at the extraction step, a list of the previous maintenance work content accumulated in the second storage unit is extracted.

Further, another invention of this application includes: a data collection unit which collects, through an input operation unit or a communication unit, predetermined data necessary to determine timing of maintenance work on a railway and stores the data in a first storage unit; a data analysis unit which estimates the timing of the maintenance work on the basis of an analytic value obtained by analyzing the data stored in the first storage unit and a set threshold; an extraction unit which extracts, under a predetermined extraction condition, a maintenance work plan from a previous maintenance work content accumulated in a second storage unit; a decision-making support unit which displays on a display unit and thereby shows a user the estimated timing and the extracted maintenance work plan; a data accumulation process unit which correlates and accumulates in the second storage unit a carried-out maintenance work content with predetermined work information on the maintenance work, the carried-out maintenance work content and the predetermined work information being obtained through the input operation unit or the communication unit; and a threshold correction unit which analyzes the predetermined work information accumulated in the second storage unit by the data accumulation process unit and corrects the threshold.

### Advantageous Effects of the Invention

According to the present invention, even if a worker is not a veteran, the worker can perceive appropriate timing of maintenance work and carry out the maintenance work with an appropriate content on the basis of collected data.

Further, by analyzing data accumulated in a database, estimating a deterioration rate of a maintenance target and correcting a threshold to an appropriate value according to the deterioration rate, safety of railway transport can be secured, and also maintenance work at low cost can be certainly carried out.

### Brief Description of Drawings

FIG. 1 is a schematic configuration diagram showing an example of the configuration of a railway maintenance support device as embodiment.
FIG. 2 is a flowchart showing an example of operation of the railway maintenance support device.
FIG. 3 is an explanatory diagram showing an example of data collected by a data collection unit.
FIG. 4 is an explanatory diagram showing another example of data collected by the data collection unit.
FIG. 5 is an explanatory diagram showing an example of an analysis result provided by a data analysis unit.
FIG. 6 is an explanatory diagram showing another example of an analysis result provided by the data analysis unit.
FIG. 7 is an explanatory diagram showing an example of maintenance work plans shown by a decision-making support unit.
FIG. 8 is an explanatory diagram regarding an improvement level in the decision-making support unit.
FIG. 9 is an explanatory diagram showing an example of operation of a data accumulation process unit.
FIG. 10 is an explanatory diagram showing an example of operation of a threshold correction unit to correct a threshold.
FIG. 11 is an explanatory diagram showing an example of integration of various databases.
FIG. 12 is an explanatory diagram showing an example of a display screen of a database sharing system.
FIG. 13 is an explanatory diagram showing an example of display of time-series measured values and estimated values.
FIG. 14 is an explanatory diagram showing another example of display of time-series measured values and estimated values.

### Embodiment for Carrying out the Invention

### [1. Explanation of Configuration]

Hereinafter, a railway maintenance support method and a railway maintenance support device which are embodiment of the present invention are detailed with reference to the drawings. However, the scope of the present invention is not limited to the illustrated examples.

### (Embodiment)

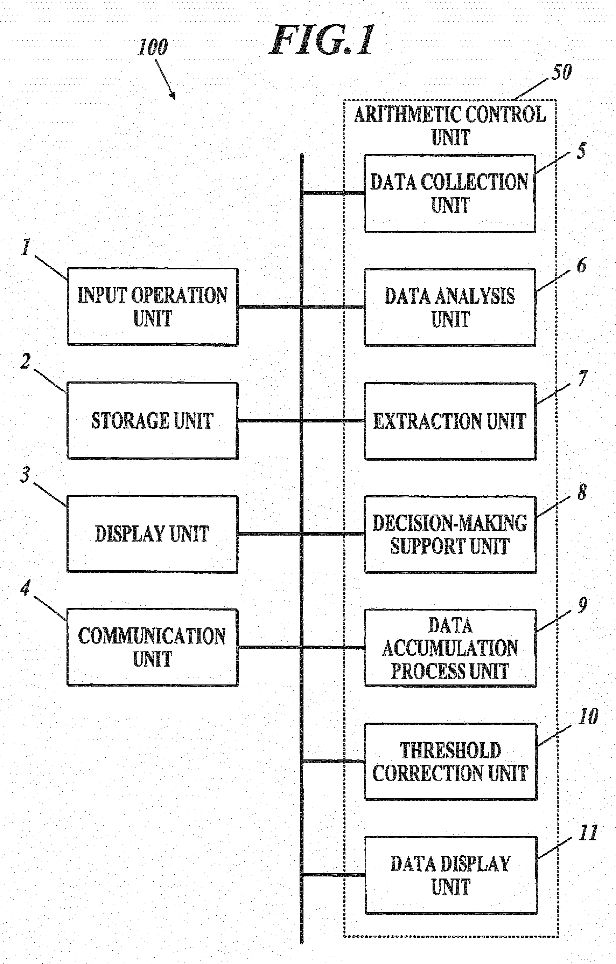

The configuration of the railway maintenance support device as the embodiment of the present invention is described with reference to FIG. 1. FIG. 1 is a schematic configuration diagram as a block diagram showing functions of a railway maintenance support device 100.

As shown in FIG. 1, the railway maintenance support device 100 (hereinafter simply referred to as a device 100) has an input operation unit 1, a storage unit 2, a display unit 3, a communication unit 4, a data collection unit 5, a data analysis unit 6, an extraction unit 7, a decision-making support unit 8, a data accumulation process unit 9 and a threshold correction unit 10.

An arithmetic control unit 50 realizes functions of the data collection unit 5, the data analysis unit 6, the extraction unit 7, the decision-making support unit 8, the data accumulation process unit 9 and the threshold correction unit 10. More specifically, the arithmetic control unit 50 has a CPU (Central Processing Unit), a ROM (Read Only Memory), a RAM (Random Access Memory) and the like, and, with the CPU working together with various program data stored in the ROM or the like and opened in a work area of the RAM, performs integrated control of the input operation unit 1, the storage unit 2, the display unit 3 and the communication unit 4 and also performs processes in the data collection unit 5, the data analysis unit 6, the extraction unit 7, the decision-making support unit 8, the data accumulation process unit 9 and the threshold correction unit 10, thereby realizing the functions of these units.

The input operation unit 1 imports data from outside the device 100 under the control of the arithmetic control unit 50, the data being frequently measured by the track equipment monitoring device described in Patent Document 1 or the like, and also operates a display screen displayed on the display unit 3. The input operation unit 1 is constituted of, for example: an input port such as a USB (Universal Serial Bus) connector, a scanner, a keyboard and/or a touch panel to input information; and a mouse and/or a touch panel to operate the display screen.

The storage unit 2 stores therein information readable and writable from the arithmetic control unit 50 (the data collection unit 5, the data analysis unit 6, the extraction unit 7, the decision-making support unit 8, the data accumulation process unit 9 and the threshold correction unit 10). The storage unit 2 is, for example, an HDD (Hard Disk Drive), an SSD (Solid State Drive) or a semiconductor memory and stores therein information such as the data collected by the input operation unit 1.

More specifically, the storage unit 2 has: a function as a first storage unit into which predetermined data necessary to determine timing of maintenance work on a railway is stored from outside the device 100; and a function as a second storage unit into which contents of maintenance work actually carried out, predetermined work information on the maintenance work and so forth are collected and accumulated from outside the device 100.

The display unit 3 displays, on the display screen, information and images based on display control signals output from the arithmetic control unit 50 (the data collection unit 5, the data analysis unit 6, the extraction unit 7, the decision-making support unit 8, the data accumulation process unit 9 and the threshold correction unit 10) . The display unit 3 is, for example, a CRT (Cathode Ray Tube), an LCD (Liquid Crystal Display) or an FPD (Flat Panel Display) using organic EL (Organic Electro-Luminescence) elements.

The communication unit 4 receives and imports, from outside the device 100, external data measured by the above-described track equipment monitoring device or the like and stores the data in the storage unit 2 by being connected to a network such as Internet or wireless communication under the control of the arithmetic control unit 50.

The data collection unit 5 collects, from outside the device 100, data relevant to items as maintenance targets such as track irregularities of rails through the input operation unit 1 or the communication unit 4, the data being measured by the track equipment monitoring device or the like, by controlling the input operation unit 1 or the communication unit 4, and stores the collected data in the storage unit 2 (first storage unit). Alternatively, the data collection unit 5 may collect the data by scanning documents such as worksheets with a scanner as the input operation unit 1 and performing digitization thereon with an OCR or the like, or may collect the data by manual input with a keyboard as the input operation unit 1. The data collection unit 5 frequently collects the data.

The data analysis unit 6 analyzes the data relevant to items as maintenance targets collected by the data collection unit 5 on the basis of their respective preset correctable thresholds and estimates timing of maintenance work on each maintenance target.

The extraction unit 7 extracts, under a predetermined extraction condition, maintenance work plans from previous maintenance work contents accumulated in the storage unit 2 (second storage unit).

The predetermined extraction condition is, for example, a condition under which a list of the previous maintenance work contents accumulated in the storage unit 2 (second storage unit) is extracted or a condition under which maintenance work plans are extracted on the basis of predetermined work information (evaluation information, result information, period information, etc. described below) accumulated in the storage unit 2 (second storage unit).

The decision-making support unit 8 displays on the display unit 3 and thereby shows the timing of the maintenance work on each maintenance target estimated by the data analysis unit 6 and its maintenance work plans to carry out extracted by the extraction unit 7, the maintenance work plans being selectable, thereby supporting workers or the like in making their decisions.

The data accumulation process unit 9 obtains and accumulates in the storage unit 2 (second storage unit) contents of maintenance work actually carried out to build a database thereof through the input operation unit 1 or the communication unit 4. The information accumulated in the storage unit 2 (second storage unit) to build the database is not only the contents of maintenance work actually carried out but includes the evaluation information on evaluation of the work contents, the result information on executed periods and costs, and the period information on periods to the next maintenance work(s) .

The threshold correction unit 10 analyzes the data accumulated in the database in the storage unit 2 (second storage unit), estimates deterioration rates of the maintenance targets and corrects the thresholds used in the data analysis unit 6 to appropriate values.

For example, when an analysis result of the data accumulated in the database in the storage unit 2 shows that a maintenance target easily deteriorates at an "execution location A", the threshold therefor is made small so as to move up the timing of the maintenance work thereon. Consequently, safety of railway transport can be secured.

Further, for example, when an analysis result of the data accumulated in the database in the storage unit 2 shows that the maintenance target hardly deteriorates at an "execution location B", the timing of the maintenance work thereon may be postponed, and hence the threshold therefor is made large. Consequently, safety of railway transport can be secured, and also cost for maintenance work can be reduced.

### [2. Explanation of Railway Maintenance Support Operation]

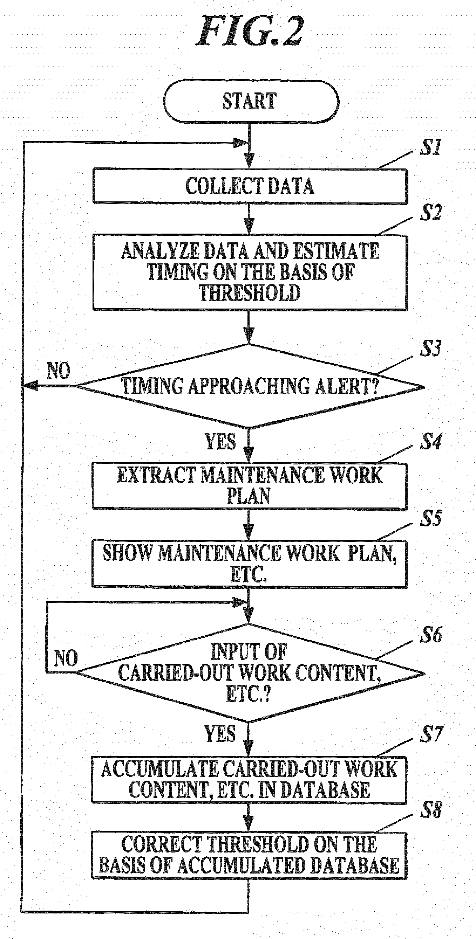

Specific operation of the device 100 as the embodiment of the present invention is detailed with reference to FIG. 2 to FIG. 10.

As shown in the flowchart of FIG. 2, the data collection unit 5 collects, from outside the device 100, data relevant to an item as a maintenance target such as a track irregularity of rails by controlling the input operation unit 1, the data being measured by a track equipment monitoring device or the like, and stores the collected data in the storage unit 2 (first storage unit) (Step S1: data collection step).

Alternatively, the data collection unit 5 collects, from outside the device 100, data relevant to an item as a maintenance target such as a track irregularity of rails by being connected to a network such as Internet or wireless communication by controlling the communication unit 4, the data being measured by the track equipment monitoring device or the like, and stores the collected data in the storage unit 2 (first storage unit).

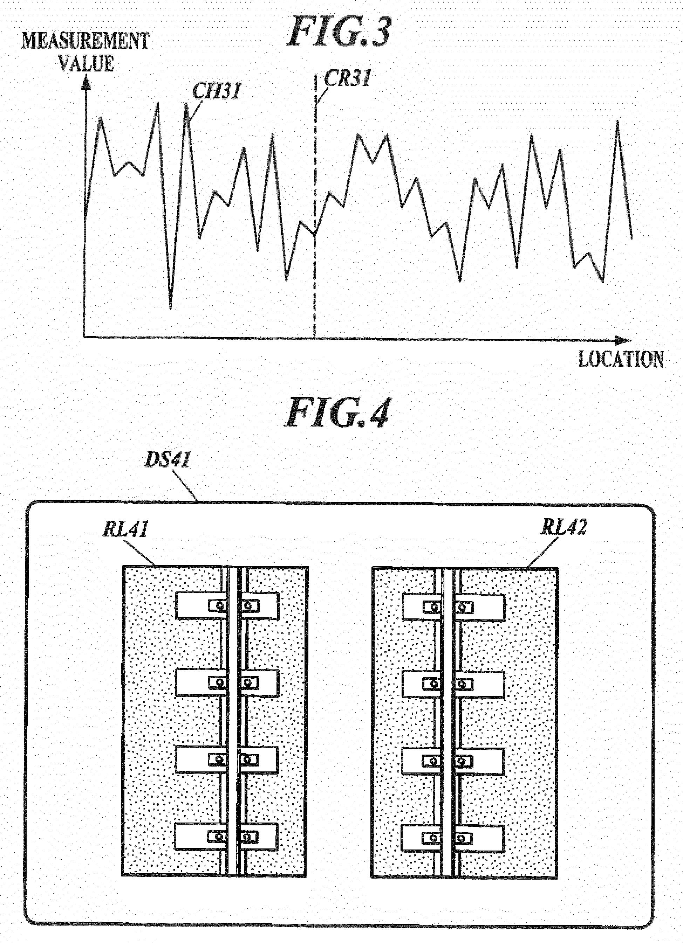

FIG. 3 and FIG. 4 are explanatory diagrams showing examples of the data which the data collection unit 5 collects and stores in the storage unit 2 (first storage unit) by controlling the input operation unit 1. FIG. 3 shows data plotted with the measurement value "CH31" of a track irregularity of rails or the like on the vertical axis with respect to the location of the rails on the horizontal axis.

By specifying an arbitrary location on the horizontal axis with a cursor CR31 disposed on the graph of FIG. 3, rail images taken at the location can be displayed, for example, as shown in FIG. 4. On a screen DS41 shown in FIG. 4, the "RL41" is an image of a left rail at the location, and the "RL42" is an image of a right rail at the location.

The data analysis unit 6 reads out the data relevant to the item as the maintenance target from the storage unit 2 (first storage unit), analyzes the data on the basis of a preset correctable threshold and estimates timing of maintenance work on the maintenance target (Step S2: data analysis step), and determines whether or not the timing of the maintenance work on the maintenance target has arrived (Step S3). When determining that the timing of the maintenance work on the maintenance target has not arrived yet (Step S3: No), the data analysis unit 6 returns the process to Step S1.

The above-mentioned preset correctable threshold is not a fixed initial value but a "set threshold" which is a threshold corrected by advancing the cycle of the flowchart shown in FIG. 2, and this "set threshold" is used at Step S2, namely, the data analysis step.

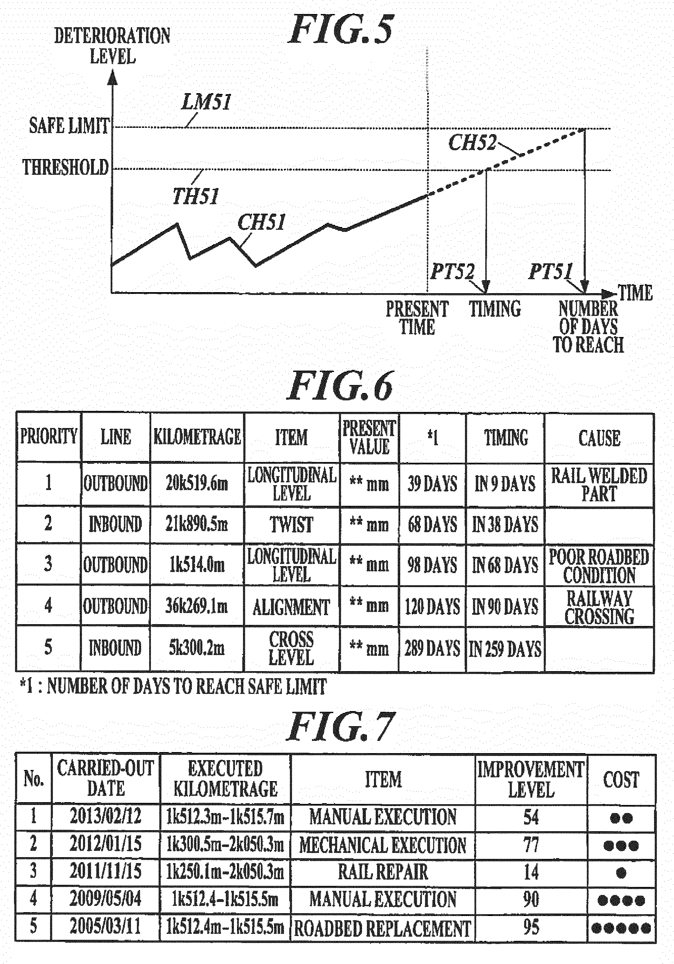

FIG. 5 is an explanatory diagram showing an example of an analysis result provided by the data analysis unit 6. The deterioration level represented by the "CH51" extracted by analysis of data relevant to an item as a maintenance target is, for example, time-series data of one location extracted from the data shown in FIG. 3, and the deterioration level increases over time until the "Present Time". It is estimated from the estimated deterioration level represented by the "CH52" that the deterioration level reaches the "Safe Limit; LM51" in the "Number of Days to Reach; PT51".

However, it is too late to carry out maintenance work when the deterioration level reaches the safe limit. Hence, the "Timing; PT52" on which the deterioration level is estimated to reach the "Threshold; TH51", which is preset with some leeway, is determined as timing of the maintenance work.

FIG. 6 is an explanatory diagram showing an example of an analysis result provided by the data analysis unit 6. FIG. 6 is a table in which maintenance targets are arranged in order of estimated timing starting from the nearest from the present time. For example, the maintenance target having the priority "1" is the "outbound line", "20k5190.6m" in kilometrage and "longitudinal level" of rails as the item, and these are shown together with the present value, the estimated number of days to reach the safe limit, the estimated timing, the cause and so forth in a list form.

When it is determined that the timing of the maintenance work on the maintenance target is approaching, a timing approaching alert is shown (Step S3: Yes), and the extraction unit 7 extracts, under a predetermined extraction condition, (a) maintenance work plans to carry out from data accumulated in a database in the storage unit 2 (second storage unit) (Step S4: extraction step), and the decision-making support unit 8 shows, on the display unit 3, the estimated timing of the maintenance work on the maintenance target and the extracted maintenance work plans, which are selectable (Step S5: decision-making support step).

FIG. 7 is an explanatory diagram showing an example of maintenance work plans shown on the display unit 3 by the decision-making support unit 8, and the "Carried-out Date", "Executed Kilometrage", "Item", "Improvement Level" and "Cost" are shown in a list form. Note that, in the "Cost", the more the number of "●" is, the higher the cost is.

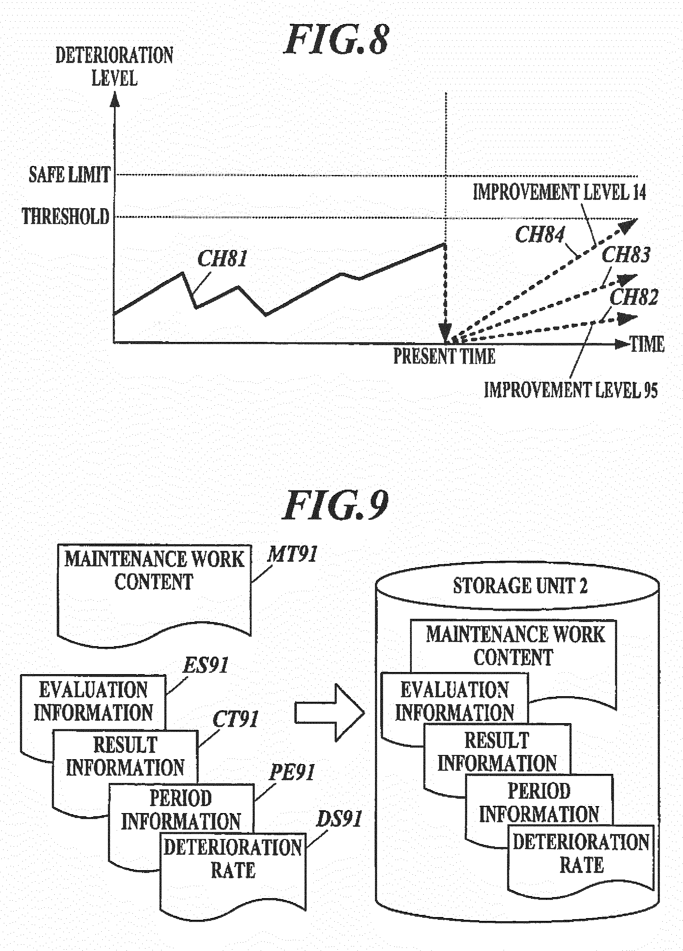

FIG. 8 is an explanatory diagram regarding the improvement level in the decision-making support unit 8. The improvement level is based on estimation of how the deterioration level changes after a maintenance work plan is carried out. When the deterioration level changes a little over time, the improvement level is a large value, whereas when the deterioration level changes greatly over time, the improvement level is a small value.

The "Improvement Level" of the fifth maintenance work plan in FIG. 7 is a large value. Hence, according to the estimation of how the deterioration level changes after this maintenance work plan is carried out, as represented by the "CH82" in FIG. 8, the deterioration level changes a little over time, and hence a period to the next maintenance work to be carried out becomes long.

On the other hand, the "Improvement Level" of the third maintenance work plan in FIG. 7 is a small value. Hence, according to the estimation of how the deterioration level changes after this maintenance work plan is carried out, as represented by the "CH84" in FIG. 8, the deterioration level changes greatly over time, and hence a period to the next maintenance work to be carried out becomes short as compared with the fifth maintenance work plan in FIG. 7.

However, when the "Cost" is looked at, the third maintenance work plan is less expensive than the fifth maintenance work plan in FIG. 7. Therefore, a worker can make his/her decision, considering the cost to be incurred and the improvement level.

The data accumulation process unit 9 determines whether or not a maintenance work content actually carried out and so forth are input through the input operation unit 1 (Step S6). When determining that the actually-carried-out maintenance work content and so forth are not input because of entry work being forgotten or the like (Step S6: No), the data accumulation process unit 9 repeats Step S6.

On the other hand, when determining that the actually-carried-out maintenance work content and so forth are input (Step S6: Yes), the data accumulation process unit 9 obtains the input actually-carried-out maintenance work content and so forth and accumulates the same in the storage unit 2 (second storage unit) to build up the database (Step S7: data accumulation process step).

Alternatively, the data accumulation process unit 9 obtains a maintenance work content actually carried out and so forth from outside the device 100 by being connected to a network such as Internet or wireless communication by controlling the communication unit 4 and stores the data in the storage unit 2 (second storage unit).

FIG. 9 is an explanatory diagram showing an example of operation of the data accumulation process unit 9. The data accumulation process unit 9 obtains a maintenance work content actually carried out through the input operation unit 1 (or the communication unit 4) and accumulates the same in the storage unit 2 (second storage unit) to build up the database. More specifically, the information accumulated in the storage unit 2 (second storage unit) to build up the database is not only an actually-carried-out maintenance work content "MT91" but includes, as work information on the work content, evaluation information "ES91"; result information "CT91" on an executed period, cost and so forth; period information "PE91" on a period to the next maintenance work; and a deterioration rate "DS91".

At the end, the threshold correction unit 10 analyzes the data accumulated in the database in the storage unit 2 (second storage unit) and corrects the threshold used by the data analysis unit 6 to an appropriate value according to a deterioration rate of the maintenance target (Step S8: threshold correction step) and returns the process to Step S1. Steps S1 to S8 are successively repeated any number of times, whereby the collected data are successively accumulated in the database.

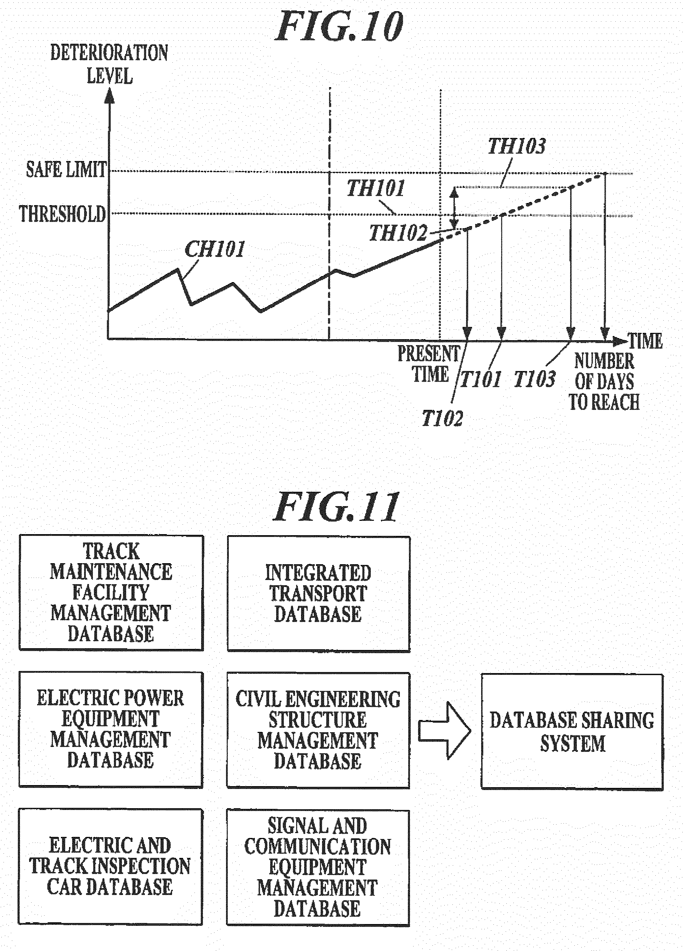

FIG. 10 is an explanatory diagram showing an example of operation of the threshold correction unit 10 to correct a threshold. When the deterioration level represented by the "CH101" in FIG. 10 is, for example, the above-described data of the "execution location A", the maintenance target easily deteriorates at the "execution location A" as described above, so that the threshold is made small to move up the timing of the maintenance work.

That is, because the estimated deterioration rate of the maintenance target is fast at the "execution location A", the threshold correction unit 10 corrects the present threshold "TH101" in FIG. 10 to the "TH102" which is smaller than the "TH101". Then, the data analysis unit 6 performs the data analysis on the basis of the corrected threshold represented by the "TH102" in FIG. 10 at Step S2, so that the estimated timing is corrected to the "T102" from the "T101", whereby the timing of the maintenance work is moved up. Consequently, safety of railway transport can be secured.

On the other hand, when the deterioration level represented by "CH101" in FIG. 10 is, for example, the above-described data of the "execution location B", the maintenance target hardly deteriorates at the "execution location B" as described above, so that the timing of the maintenance work may be postponed, and hence the threshold is made large.

That is, because the estimated deterioration rate of the maintenance target is slow at the "execution location B", the threshold correction unit 10 corrects the present threshold "TH101" in FIG. 10 to the "TH103" which is larger than the "TH101" . Then, the data analysis unit 6 performs the data analysis on the basis of the corrected threshold represented by the "TH103" in FIG. 10 at Step S2, so that the estimated timing is corrected to the "T103" from the "T101", whereby the timing of the maintenance work is postponed. Consequently, safety of railway transport can be secured, and also cost for maintenance work can be reduced.

Thus, by analyzing the data accumulated by successively repeating Steps S1 to S8 any number of times, estimating a deterioration rate of a maintenance target and correcting a threshold therefor used by the data analysis unit 6 to an appropriate value according to the estimated deterioration rate, safety of railway transport can be secured, and also maintenance work at low cost can be certainly carried out.

That is, although a predetermined initial value based on conventional maintenance rules and/or work experience on the railway equipment is used as the set threshold at Step S2 in the flowchart of FIG. 2 in determination of timing of maintenance work first time, after that, the threshold corrected at Step S8 can be used as the set threshold at the coming Step S2 in determination of the timing of the maintenance work with the railway maintenance support device of the present invention. Steps S1 to S8 are successively repeated any number of times, whereby the set threshold is corrected any number of times, so that the timing optimized for condition of the railway equipment can be determined.

As described above, by (i) collecting predetermined data necessary to determine timing of maintenance work on a railway, (ii) estimating the timing of the maintenance work on the basis of an analytic value obtained by analyzing the data and a set threshold, (iii) extracting, under a predetermined extraction condition, (a) maintenance work plans from (a) previous maintenance work contents, (iv) showing a user the estimated timing and the extracted maintenance work plans, (v) correlating and accumulating a carried-out maintenance work content with predetermined work information on the maintenance work, and (vi) analyzing the accumulated predetermined work information and correcting the threshold, even if the user is not a veteran worker, he/she can perceive appropriate timing of maintenance work and select and carry out the maintenance work with an appropriate content on the basis of the collected data.

Further, by analyzing the data accumulated in the database and correcting the threshold used in the data analysis unit 6 to an appropriate value according to a deterioration rate, which is estimated, of a maintenance target, safety of railway transport can be secured, and also maintenance work at low cost can be certainly carried out.

In the explanation of the embodiment of the present invention or the like, the data collection unit 5 collects, from outside the device 100, data relevant to items as maintenance targets such as track irregularities of rails, the data being measured by the track equipment monitoring device or the like, and stores the collected data in the storage unit 2 (first storage unit). However, the items as the maintenance targets are not limited to those relating to rails. The data collection unit 5 may collect data from railway equipment monitoring devices which measure data relevant to other railway equipment such as overhead wires, devices of rolling stock, points, bridges and escalators at stations.

For example, in the case of overhead wires, it is possible that: an overhead wire monitoring device is placed on the roof of an inspection car or rolling stock in operation and measures pantograph impact, arcs (ultraviolet rays) caused by contact loss, pantograph images, wear of contact wires and/or height and deviation of contact wires; the data collection unit 5 collects, from outside the device 100, data relevant to an item as a maintenance target, for example, wear of contact wires, measured by the overhead wire monitoring device or the like, and stores the collected data in the storage unit 2 (first storage unit) ; timing of maintenance work thereon is estimated by analyzing the collected data on the basis of a set threshold; and so forth.

Similarly, not only with respect to rails and overhead wires but also others, there are various items as maintenance targets. So far, databases have been built for individual targets.

FIG. 11 is an explanatory diagram showing an example of integration of various databases. As shown in FIG. 11, there are a track maintenance facility management database, an electric power equipment management database, an electric and track inspection car database, an integrated transport database, a civil engineering structure management database, a signal and communication equipment management database, and so forth.

These individual databases are databases where their data are managed individually, and mutual use of the databases is not expected. Hence, the device using the railway maintenance support method as the embodiment of the present invention needs to collect data relative to items as maintenance targets from these individual databases. Thus, the databases are not effectively used.

To deal with this, for example, absolute location information is shared, so that mutual use of the data of the databases becomes feasible, and as shown in FIG. 11, the track maintenance facility management system database, the electric power equipment management database, the electric and track inspection car database, the integrated transport database, the civil engineering structure management database, the signal and communication equipment management database and so forth are integrated, so that a database sharing system is constructed. Consequently, data relevant to items as maintenance targets can all be collected therefrom.

Further, when the carried-out maintenance work content and so forth are accumulated at Step S7, the collected data may also be accumulated in the database sharing system. Consequently, data relevant to items as maintenance targets can be shared.

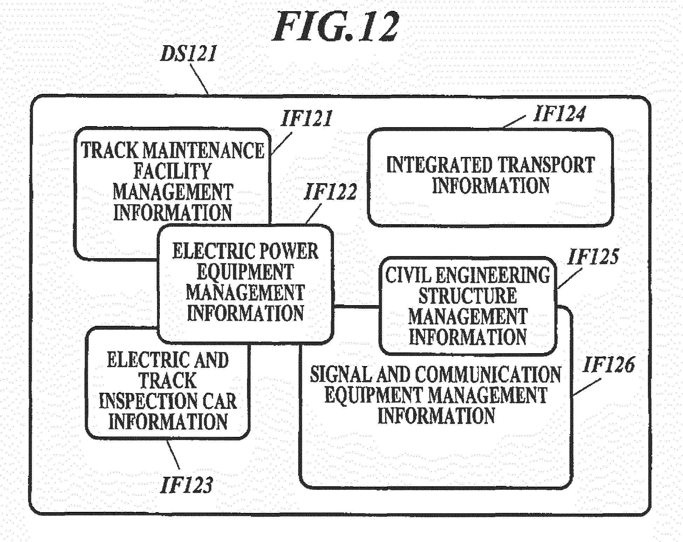

FIG. 12 is an explanatory diagram showing an example of a display screen of the database sharing system. By constructing the database sharing system, as shown in FIG. 12, on one display screen DS121, track maintenance facility management information IF121, electric power equipment management information IF122, electric and track inspection car information IF123, integrated transport information IF124, civil engineering structure management information IF125 and signal and communication equipment management information IF126 can all be displayed. Consequently, not only efficiency of work with the device using the railway maintenance support method as the embodiment of the present invention but also efficiency of general work can be significantly improved.

Further, in the explanation of the embodiment of the present invention or the like, the analysis method in the data analysis unit 6 is not specified, but when the deterioration is directly known from the collected data, the timing of the maintenance work can be estimated by analyzing the data with a statistical method.

On the other hand, when the deterioration is not directly known from the collected data, the timing of the maintenance work can be estimated by analyzing the data with principal component analysis, invariant analysis, cluster analysis or the like.

Further, in the explanation of the embodiment of the present invention or the like, the extraction unit 7 extracts maintenance work plans to carry out from the data accumulated in the database in the storage unit 2 (second storage unit), and the decision-making support unit 8 shows, on the display unit 3, the estimated timing of the maintenance work on the maintenance target and the extracted maintenance work plans, which are selectable.

In this case, because appropriate maintenance work plans are shown in advance as candidates, a maintenance work plan(s) can be efficiently decided.

Further, although, in FIG. 7, the appropriate maintenance work plans are shown by being extracted from the previously-carried-out maintenance work contents on the basis of the information on the "Improvement Level" and "Cost", the previous maintenance work contents may be shown as a maintenance work plan list. For example, the maintenance work contents previously carried out may be displayed in a list form in time series (starting from the most recent one).

In this case, because the previous maintenance work contents are displayed in a list form, all necessary maintenance work plan(s) can be decided.

Further, in the explanation of the embodiment of the present invention or the like, when it is determined at Step S3 that the timing of the maintenance work on the maintenance target has arrived, the extraction unit 7 extracts, under a predetermined extraction, the maintenance work plans to carry out from the data accumulated in the database in the storage unit 2 (second storage unit) . Needless to say, however, staff, materials and so forth need to be prepared for actual maintenance work. Hence, it is possible to extract, under the predetermined extraction condition, the maintenance work plans to carry out at Step S4 and to show the extracted maintenance work plans at Step S5, without determining whether or not the timing has arrived at Step S3.

Further, a data display unit 11 (data display step), the function of which is realized by the arithmetic control unit 50, is provided, and the data display unit 11 displays, on the display unit 3, the graph plotted with the measurement value "CH31" of a track irregularity of rails or the like on the vertical axis with respect to the location of the rails on the horizontal axis as shown in FIG. 3.

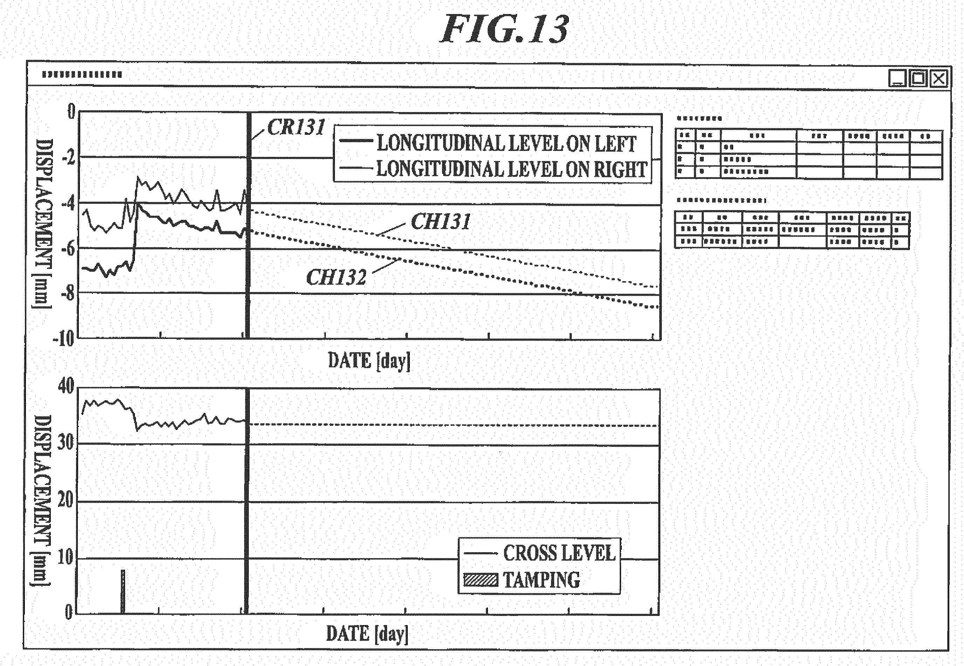

When an arbitrary location is specified on the horizontal axis with the cursor CR31, which is disposed on the graph of FIG. 3, through the input operation unit 1, the data display unit 11 may display graphs of time-series measured values and estimated values of the measurement value (displacement, for example) of this selected location as shown in FIG. 13.

That is, the data display unit 11 displays, on the display unit 3, the graphs plotted with the "CH131" and "CH132" of the displacement on the vertical axis with respect to the date on the horizontal axis as shown in FIG. 13. A cursor "CR131" in FIG. 13 indicates the present date. On the left of the cursor "CR131", the measured value (solid line part) is shown, and on the right thereof, the estimated value (broken line part) is shown. As shown, for example, by the graph of the "CH131" in FIG. 13, the displacement becomes larger over time.

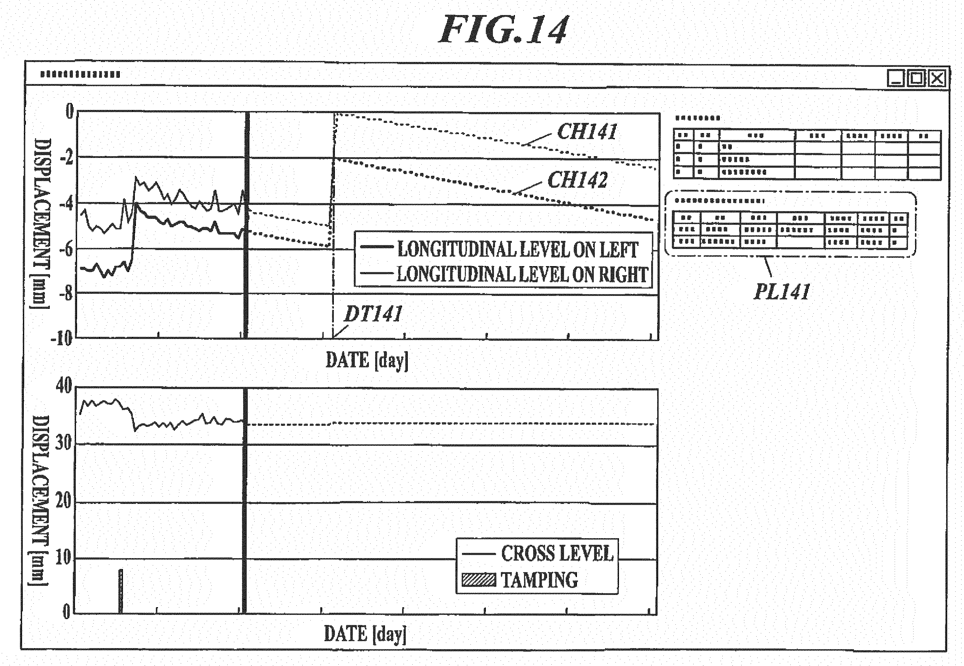

When a scheduled date of the maintenance work is input in a repair plan table "PL141" in FIG. 14 with the input operation unit 1, the data display unit 11 displays, on the display unit 3, graphs of the "CH141" and "CH142" of the displacement by reflecting an expected effect of the maintenance work on the estimated values thereof on and after the scheduled date as shown in FIG. 14. For example, when the scheduled date is a date "DT141", the estimated values on and after the date "DT141" are displayed by being improved (close to a displacement of 0) by the effect of the maintenance work.

### Industrial Applicability

The present invention is applicable to railways and equipment similar or relating to railways which need maintenance.

### Explanation of Reference Numerals

- 1: Input Operation Unit
- 2: Storage Unit
- 3: Display Unit
- 4: Communication Unit
- 5: Data Collection Unit
- 6: Data Analysis Unit
- 7: Extraction Unit
- 8: Decision-making Support Unit
- 9: Data Accumulation Process Unit
- 10: Threshold Correction Unit
- 11: Data Display Unit
- 50: Arithmetic Control Unit
- 100: Device

## Claims

1. A railway maintenance support method comprising:
a data collection step of collecting predetermined data necessary to determine timing of maintenance work on a railway and storing the data in a first storage unit;
a data analysis step of estimating the timing of the maintenance work on the basis of an analytic value obtained by analyzing the data stored in the first storage unit and a set threshold;
an extraction step of extracting, under a predetermined extraction condition, a maintenance work plan from a previous maintenance work content accumulated in a second storage unit;
a decision-making support step of showing a user the estimated timing and the extracted maintenance work plan;
a data accumulation process step of correlating and accumulating in the second storage unit a carried-out maintenance work content with predetermined work information on the maintenance work; and
a threshold correction step of analyzing the predetermined work information accumulated in the second storage unit at the data accumulation process step and correcting the threshold.

2. The railway maintenance support method according to claim 1, wherein
the predetermined work information includes a deterioration rate of a maintenance target after the maintenance work, and
at the threshold correction step, the threshold is corrected according to the deterioration rate, which is estimated, of the maintenance target.

3. The railway maintenance support method according to claim 1 or 2, wherein at the data analysis step, the analytic value is calculated by analyzing the collected data with a statistic method.

4. The railway maintenance support method according to claim 1 or 2, wherein at the data analysis step, the analytic value is calculated by analyzing the collected data with principal component analysis, invariant analysis or cluster analysis.

5. The railway maintenance support method according to any one of claims 1 to 4, wherein at the extraction step, a list of the previous maintenance work content accumulated in the second storage unit is extracted.

6. The railway maintenance support method according to any one of claims 1 to 4, wherein at the extraction step, the maintenance work plan is extracted on the basis of the predetermined work information accumulated in the second storage unit.

7. A railway maintenance support device comprising:
a data collection unit which collects, through an input operation unit or a communication unit, predetermined data necessary to determine timing of maintenance work on a railway and stores the data in a first storage unit;
a data analysis unit which estimates the timing of the maintenance work on the basis of an analytic value obtained by analyzing the data stored in the first storage unit and a set threshold;
an extraction unit which extracts, under a predetermined extraction condition, a maintenance work plan from a previous maintenance work content accumulated in a second storage unit;
a decision-making support unit which displays on a display unit and thereby shows a user the estimated timing and the extracted maintenance work plan;
a data accumulation process unit which correlates and accumulates in the second storage unit a carried-out maintenance work content with predetermined work information on the maintenance work, the carried-out maintenance work content and the predetermined work information being obtained through the input operation unit or the communication unit; and
a threshold correction unit which analyzes the predetermined work information accumulated in the second storage unit by the data accumulation process unit and corrects the threshold.
